# EUROPEAN PATENT APPLICATION

(11) **EP 1 632 731 A2**
(43) Date of publication of application: **08.03.2006**
(21) Application number: 05255415.1
(22) Date of filing: 02.09.2005
(51) Int. Cl.: F24J 2/24, F24J 2/26, F28D 1/047, F28F 21/06

(54) **Heat exchanger**

(30) Priority: 06.09.2004 GB 0419704
(71) Applicant: Archibald, W K MacGregor, Midlothian EH23 4SQ (GB)
(72) Inventor: Archibald, W K MacGregor, Midlothian EH23 4SQ (GB)
(74) Representative: Murnane, Graham John

(57) **Abstract**

A heat exchanger (10) comprising: a rigid backing member (54); a flexible sheet member (30); and a flexible pipe (20) provided between the rigid backing member (54) and the flexible sheet member (30).

## Description

The present invention relates to heat exchangers such as heat emitters or heat collectors. In particular, but not exclusively, the invention relates to heat exchangers mountable to a surface of a building or the like.

GB 2280741 describes a heat exchanger formed using a flexible rubber pipe sandwiched between two flexible aluminium sheets. The pipe is compressed by the two sheets so that the contact surface area between the pipe and the sheets is increased but not to the extent that flow in the pipe is restricted. The apparatus can be used as a heat collector, in which heat is transferred from the flexible sheets to the fluid flowing in the pipe, or as an emitter, in which heat is transferred from the fluid flowing in the pipe to each of the sheets. The two flexible sheets are fastened together between pipe runs using rivets or spot welds.

The apparatus of GB 2280741 has a number of disadvantages or limitations. Heat is exchanged between the pipe and both of the sheets. In many applications this can be wasteful or inefficient and can cause problems when mounting the apparatus. The undulating surface of each of the sheets also makes mounting of the apparatus more difficult. Also, the arrangement, and in particular the necessary fastening means, complicates assembly of the apparatus and this assembly cannot readily be carried out in situ. Also, because both of the sheets are flexible, it can be.more difficult to obtain the desired degree of compression of the pipe and satisfactory thermal contact between the pipe and the sheets.

According to a first aspect of the present invention, there is provided a heat exchanger comprising:
a rigid backing member;
a flexible sheet member; and
a flexible pipe provided between the rigid backing member and the flexible sheet member.

Preferably the heat exchanger includes fastening means for attaching the flexible sheet member to the rigid backing member such that the pipe is compressed between the flexible sheet member and rigid backing member. Preferably the fastening means comprises a plurality of screws. Preferably each screw is screwed into and retained by the rigid backing member.

Preferably the rigid backing member comprises an insulating layer having a low thermal conductivity. Preferably the insulating layer comprises a rigid foam material. Preferably the rigid backing member comprises a support layer. Preferably the support layer comprises plywood. Preferably one or both of the rigid foam material and the rigid backing material are planar and flat.

Preferably the flexible sheet member has a high thermal conductivity. Preferably the flexible sheet member is formed from aluminium, although other metals or alloys are envisaged.

Preferably the flexible pipe is formed from a rubber or a polymer. The material of the flexible pipe may include additives for enhancing thermal conductivity. The additives may include a carbon based substance, such as carbon black or graphite powder.

Preferably the flexible pipe is arranged in a serpentine or grid-like pattern. A plurality of flexible pipes may be provided.

Preferably the apparatus includes fluid pumping means for transporting a fluid along the pipe. Preferably the fluid is water or any other suitable coolant.

According to a second aspect of the present invention, there is provided a heat exchanger system comprising a plurality of heat exchangers in accordance with the first aspect of the invention.

Preferably a common flexible pipe 20 is used for each of the plurality of heat exchangers.

According to a third aspect of the present invention, there is provided a method of providing a heat exchanger comprising the steps of:
providing a rigid backing member;
providing a flexible pipe at the rigid backing member;
substantially overlaying the flexible pipe with a flexible sheet member; and
fastening the flexible sheet member to the rigid backing member.

Preferably the method includes mounting the rigid backing member to a surface of a building.

Preferably the method includes compressing the flexible pipe between the flexible sheet member and rigid backing member.

Preferably the flexible sheet member is fastened to the rigid backing member using a plurality of screws.

Preferably the method includes arranging the flexible pipe is in a serpentine or grid-like pattern.

An embodiment of the present invention will now be described, by way of example only, with reference to the accompanying drawings, in which:
Fig. 1 is a perspective view of a heat exchanger according to the prior art;
Fig. 2 is another perspective view of the heat exchanger of Fig. 1;
Fig. 3 is a sectional side view of a heat exchanger according to the present invention; and
Fig. 4 is a plan view of the heat exchanger of Fig. 3.

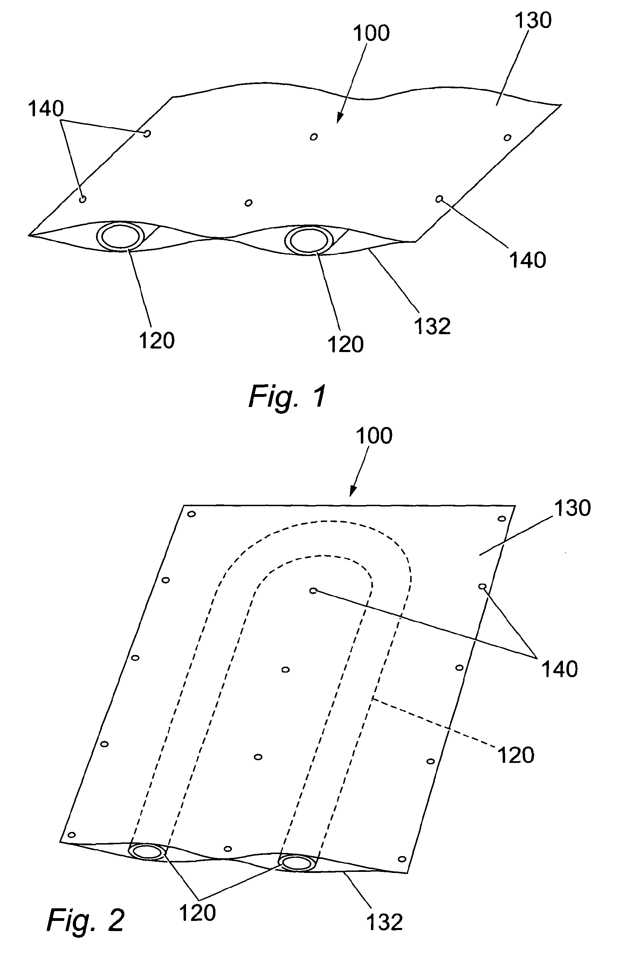

Figs. 1 and 2 show the prior art heat exchanger 100 of GB 2280741. The heat exchanger 100 is formed from a single length of pipe 120 which is made of a flexible material such as rubber. The pipe 120 is arranged in a serpentine pattern between two thin flexible sheets 130, 132. The flexible sheets are formed from a highly conductive material such as an aluminium alloy.

The two flexible sheets 130, 132 are fastened together at regular intervals by fasteners 140. The fasteners 140 are situated between pipe runs such that the pipe 6 is enclosed and compressed by the two flexible sheets 130, 132. The fasteners 140 are snap head rivets, pop rivets or spot seam welds.

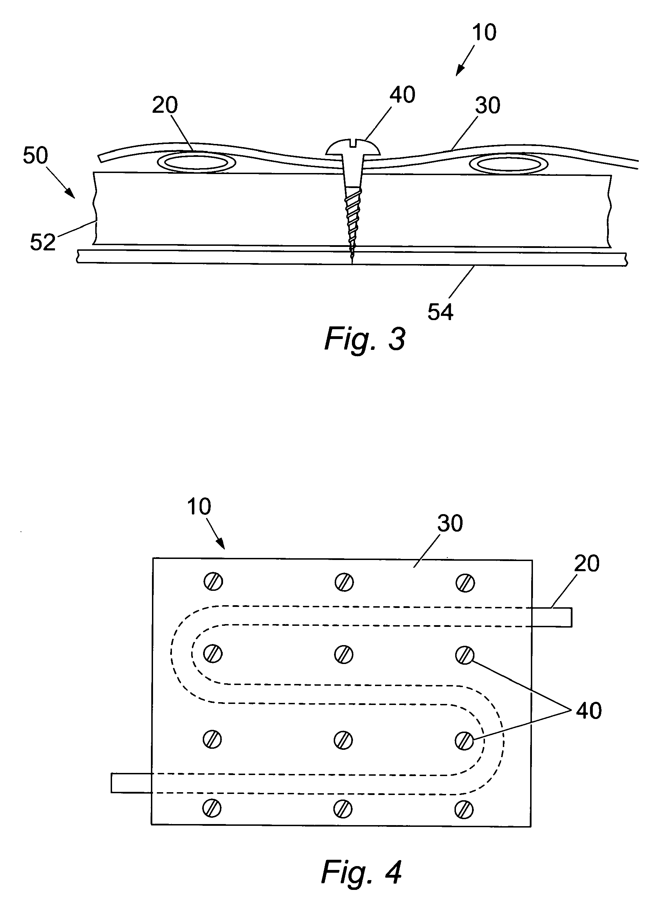

Figs. 3 and 4 show a heat exchanger 10 according to the invention. The heat exchanger comprises a rigid backing member 50 and a flexible sheet member 30. A flexible pipe 20 is provided between the rigid backing member 50 and the flexible sheet member 30.

The flexible pipe 20 is formed from a polymer which may include additives for enhancing thermal conductivity. The pipe 20 is arranged in a serpentine pattern.

The rigid backing member 50 comprises an insulating layer made from a rigid foam material 52, which has a low thermal conductivity, and also a support layer 54 made of plywood. Each of the rigid insulating layer 52 and the support layer 54 are planar and flat to allow mounting of the heat exchanger 10 to a surface of a building.

The flexible sheet member 30 is formed from aluminium and has a high thermal conductivity.

Fastening means in the form of a number of screws 40 are provided for attaching the flexible sheet member 30 to the rigid backing member 50. Alternatively, nails could be used. Each screw 40 is screwed into and retained by the rigid backing member 50, particularly the support layer 54. The pipe 20, which is originally circular in cross section, is compressed between the flexible sheet member 30 and rigid backing member 50. This increases the contact surface area between the flexible sheet member 30 and rigid backing member 50 to improve the exchange of heat. Also, the pressure of the fluid in the pipe 20 can assist in increasing the contact surface area between the flexible sheet member 30 and rigid backing member 50.

The heat exchanger 10 also includes fluid pumping means (not shown) for transporting a fluid such as water along the pipe 20. The apparatus 10 can be used as a heat collector, in which heat is transferred from the flexible sheet 30 to the fluid flowing in the pipe 20. The apparatus can also be used as an emitter, in which heat is transferred from a hot fluid flowing in the pipe 20 to the flexible sheet 30. Heat will not be transferred to the rigid backing member 50 due to its low thermal conductivity.

To provide a heat exchanger according to the invention, the rigid backing member 50 can firstly be mounted to a surface of a building. The flexible pipe 20 is then arranged in a serpentine manner at the rigid backing member 50. Temporary fasteners may be used to hold the pipe 20 in place.

The flexible sheet member 30 is then introduced such that it overlays the flexible pipe 20 and rigid backing member 50. The flexible sheet member 30 is then fastened to the rigid backing member using the screws 40.

The invention offers a simple and convenient means of providing a heat exchanger, particularly for mounting in or on a building. The heat exchanger 10 can be mounted to a wall to provide a space heater or can be used to provide under-floor heating.

The heat exchanger 10 can be assembled and installed on site, which offers greater flexibility. Heat is exchanged only between the pipe 20 and the single flexible sheet 30 and this is efficient when it is mounted to a building. The flat surface of the rigid backing member 50 assists in mounting of the apparatus 10. Also, the rigidity of the backing member 50 is beneficial for obtaining the desired degree of compression of the pipe 20 for satisfactory thermal contact between the pipe 20 and the flexible sheet 30.

The fastening means used allows rapid and easy assembly in situ using conventional tools and without requiring skilled labour. The materials of the heat exchanger 10 are all easily produced and readily available.

Various modifications and improvements can be made without departing from the scope of the present invention. For instance, more than one flexible pipe 20 may be used.

## Claims

1. A heat exchanger comprising:
a rigid backing member;
a flexible sheet member; and
a flexible pipe provided between the rigid backing member and the flexible sheet member.

2. A heat exchanger as claimed in Claim 1, including fastening means for attaching the flexible sheet member to the rigid backing member such that the pipe is compressed between the flexible sheet member and rigid backing member.

3. A heat exchanger as claimed in Claim 2, wherein the fastening means comprises a plurality of screws.

4. A heat exchanger as claimed in Claim 3, wherein each screw is screwed into and retained by at least a portion of the rigid backing member.

5. A heat exchanger as claimed in any preceding claim, wherein the rigid backing member comprises an insulating layer having a low thermal conductivity.

6. A heat exchanger as claimed in Claim 5, wherein the insulating layer comprises a rigid foam material.

7. A heat exchanger as claimed in any preceding claim, wherein the rigid backing member comprises a support layer.

8. A heat exchanger as claimed in Claim 7 when dependent on Claim 6, wherein one or both of the rigid foam material and the support layer are planar and flat.

9. A heat exchanger as claimed in any preceding claim, wherein the flexible sheet member has a high thermal conductivity.

10. A heat exchanger as claimed in any preceding claim, wherein the flexible pipe is formed from a rubber or a polymer.

11. A heat exchanger as claimed in Claim 10, wherein the material of the flexible pipe includes additives for enhancing thermal conductivity.

12. A heat exchanger as claimed in any preceding claim, wherein the flexible pipe is arranged in a serpentine or grid-like pattern.

13. A heat exchanger as claimed in any preceding claim, including fluid pumping means for transporting a fluid along the pipe.

14. A heat exchanger system comprising a plurality of heat exchangers in accordance with any preceding claim.

15. A heat exchanger system as claimed in Claim 14, wherein a common flexible pipe is used for each of the plurality of heat exchangers.

16. A method of providing a heat exchanger comprising the steps of:
providing a rigid backing member;
providing a flexible pipe at the rigid backing member;
substantially overlaying the flexible pipe with a flexible sheet member; and
fastening the flexible sheet member to the rigid backing member.

17. A method as claimed in Claim 16, including mounting the rigid backing member to a surface of a building.

18. A method as claimed in Claim 16 or 17, including compressing the flexible pipe between the flexible sheet member and rigid backing member.

19. A method as claimed in any of Claims 16 to 18, wherein the flexible sheet member is fastened to the rigid backing member using a plurality of screws.

20. A method as claimed in any of Claims 16 to 19, including arranging the flexible pipe is in a serpentine or grid-like pattern.
